# EUROPEAN PATENT APPLICATION

(11) **EP 4 549 061 A1**
(43) Date of publication of application: **07.05.2025**
(21) Application number: 24202159.0
(22) Date of filing: 24.09.2024
(51) Int. Cl.: B23B 27/10, B23B 27/16

(54) **THROUGH COOLANT CLAMPS FOR TOOL HOLDERS**

(30) Priority: 20.10.2023 US 202318382391
(71) Applicant: KENNAMETAL INC., Latrobe, PA 15650 (US)
(72) Inventor: Eichelberger, Samuel, Latrobe 15650 (US); Kaufmann, Igor, Latrobe 15650 (US); Schmid, Dominik, Latrobe 15650 (US)
(74) Representative: Prinz & Partner mbB

(57) **Abstract**

A tool holder for cooling a cutting insert is disclosed. The tool holder may include a tool holder body, a cutting insert mounted on the tool holder body, and a through coolant clamp mounted to the tool holder body that secures the cutting insert to the tool holder body and provides coolant fluid to the cutting insert. The through coolant clamp may include a base portion with a fluid chamber extending radially outward from a clamp screw hole. A nose portion extends radially outward from the base portion, and at least one nozzle is provided within the nose portion extending along a nozzle axis. The nozzle includes a nozzle inlet and a nozzle outlet with a nozzle surface therebetween. The through coolant clamp may further include a transition outer surface in fluid communication with the fluid chamber and the nozzle inlet. The transition outer surface forms a smooth transition between the fluid chamber and the coolant channel inlet that provides controlled flow of the coolant through the coolant clamp.

## Description

### FIELD OF THE INVENTION

The present invention relates to tool holders for cutting inserts, and more particularly to tool holders with through coolant clamps for securing a cutting insert to a tool holder and for providing controlled coolant flow to the cutting insert.

### BACKGROUND INFORMATION

Cutting inserts are often secured to tool holders through the use of a clamp. Cutting inserts generate heat during operation and coolant may be used to cool the inserts during use. The coolant may pass through the clamp and be directed toward the cutting inserts. However, due to operating conditions, the flow behavior of the coolant may not be optimal.

### SUMMARY OF THE INVENTION

The present invention provides a tool holder for cooling a cutting insert. The tool holder may include a tool holder body, a cutting insert mounted on the tool holder body, and a through coolant clamp mounted to the tool holder body that secures the cutting insert to the tool holder body and provides coolant fluid to the cutting insert. The through coolant clamp may include a base portion with a fluid chamber extending radially outward from a clamp screw hole. A nose portion extends radially outward from the base portion, and at least one nozzle is provided within the nose portion extending along a nozzle axis. The nozzle includes a nozzle inlet and a nozzle outlet with a nozzle surface therebetween. The through coolant clamp may further include a transition outer surface in fluid communication with the fluid chamber and the nozzle inlet. The transition outer surface forms a smooth transition between the fluid chamber and the coolant channel inlet that provides controlled flow of the coolant through the coolant clamp.

An aspect of the present invention is to provide a tool holder assembly comprising: a tool holder body; a cutting insert mounted on the tool holder body; a through coolant clamp mounted on the tool holder body structured and arranged to secure the cutting insert on the tool holder body and to provide coolant fluid to the cutting insert and comprising a clamp screw hole having a longitudinal axis; and a clamp screw extending through the clamp screw hole fastening the coolant clamp to the tool holder body and comprising an internal axial coolant fluid passage. The through coolant clamp comprises: a base portion; a coolant fluid reservoir chamber within the base portion extending radially rearward from the clamp screw hole surrounding at least a portion of the clamp screw and in fluid communication with the internal axial coolant fluid passage of the clamp screw; a nose portion extending radially forward from the base portion; and at least one nozzle within the nose portion extending along a nozzle axis. The at least one nozzle comprises: a nozzle inlet in fluid communication with the coolant fluid reservoir chamber; a nozzle outlet opposite the nozzle inlet; and a nozzle coolant channel extending between the nozzle inlet and the nozzle outlet along a nozzle coolant channel axis; and a transition outer surface in fluid communication between the coolant fluid reservoir chamber and the nozzle inlet of the at least one nozzle forming a smooth transition between the coolant fluid reservoir chamber and the nozzle inlet such that a transition angle measured in a plane perpendicular to the longitudinal axis of the through coolant clamp between at least a portion of the transition surface and the nozzle coolant channel axis is less than 60°.

Another aspect of the present invention is to provide a through coolant clamp for providing coolant fluid to a cutting insert comprising: a base portion; a coolant fluid reservoir chamber within the base portion extending radially rearward from a clamp screw hole extending from a clamp top surface of the through coolant clamp to a clamp bottom surface of the through coolant clamp; a nose portion extending radially forward from the base portion; and at least one nozzle within the nose portion extending along a nozzle axis. Each nozzle of the at least one nozzle comprises: a nozzle inlet in fluid communication with the coolant fluid reservoir chamber; a nozzle outlet opposite the nozzle inlet; and a nozzle coolant channel extending between the nozzle inlet and the nozzle outlet along a nozzle coolant channel axis; and a transition outer surface in fluid communication between the coolant fluid reservoir chamber and the nozzle inlet of the at least one nozzle forming a smooth transition between the coolant fluid reservoir chamber and the nozzle inlet such that a transition angle measured in a plane perpendicular to the longitudinal axis of the through coolant clamp between at least a portion of the transition surface and the nozzle coolant channel axis is less than 60°.

A further aspect of the present invention is to provide a clamp screw for a through coolant tool holder clamp assembly, the clamp screw comprising: a threaded lower portion; a head at an end of the clamp screw opposite the threaded lower portion; an upper portion between the threaded lower portion and the head; an internal coolant axial passage having an inlet opening adjacent the threaded lower portion and extending to the upper portion; and at least one coolant radial channel in fluid communication with the coolant axial passage and having a radial outlet opening through an outer surface of the upper portion.

These and other aspects of the present invention will be more apparent from the following description.

### BRIEF DESCRIPTION OF THE DRAWINGS

Fig. 1 is an isometric view of a tool holder assembly having a through coolant clamp securing a cutting insert to a tool holder with a clamp screw in accordance with an embodiment of the present invention.
Fig. 2 is a top view of the tool holder assembly of Fig. 1.
Fig. 3 is a side-sectional view of the tool holder assembly of Fig. 1 taken through section 3-3 of Fig. 2.
Fig. 4 is a top isometric view of a through coolant clamp in accordance with an embodiment of the present invention.
Fig. 5 is a side view of the through coolant clamp of Fig. 4.
Fig. 6 is a sectional view of the through coolant clamp taken through section 6-6 of Fig. 5
Fig. 7 is a top view of the through coolant clamp of Fig. 4.
Fig. 8 is a side-sectional view of the through coolant clamp taken through section 8-8 of Fig. 7.
Fig. 9 is a side-sectional view of the through coolant clamp taken through section 9-9 of Fig. 7.
Fig. 10 is a front view of the through coolant clamp of Fig. 4.
Fig. 11 is a rear view of the through coolant clamp of Fig. 4.
Fig. 12 is an isometric view of a clamp screw for fastening a through coolant clamp to a tool holder and delivering coolant to the through coolant clamp in accordance with an embodiment of the invention.
Fig. 13 is a side view of the clamp screw of Fig. 12.
Fig. 14 is a side-sectional view of the clamp screw taken through section 14-14 of Fig. 13.
Fig. 15 is a side view of a through coolant clamp in accordance with another embodiment of the present invention.
Fig. 16 is a front view of the through coolant clamp of Fig. 15.
Fig. 17 is a top view of the through coolant clamp of Fig. 15.
Fig. 18 is a side view of a through coolant clamp in accordance with a further embodiment of the present invention.
Fig. 19 is a front view of a through coolant clamp of Fig. 18.
Fig. 20 is top view of a through coolant clamp of Fig. 18.

### DETAILED DESCRIPTION

Tool holder assemblies of the present invention address the issues mentioned above by providing a through coolant clamp that provides controlled flow of cooling fluid at operating conditions through gradual changes in surfaces within the through coolant clamp, as more fully described below. As used herein, the term "fluid" refers to any flowable coolant such as water, oil, other liquids and gas that may pass through a through coolant clamp to cool a cutting insert during cutting operations of a tool holder.

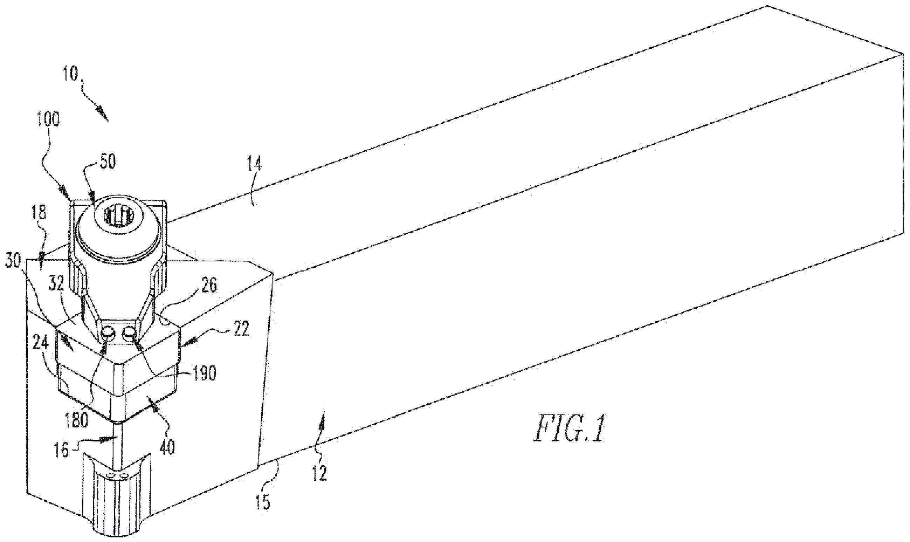

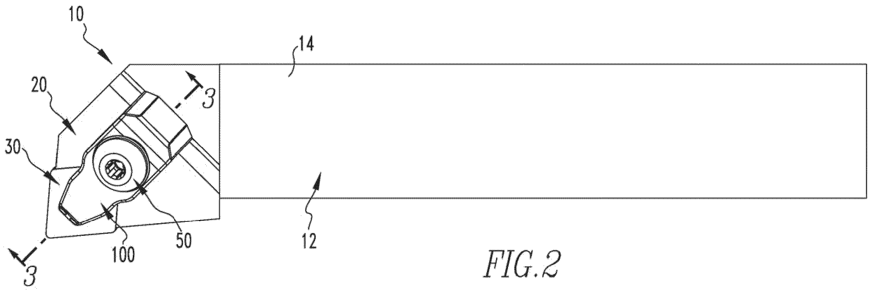

Referring to Figs. 1-3, a tool holder 10 is shown according to an embodiment of the present invention. The tool holder 10 includes a tool holder body 12 with a head portion 20 having a cutting insert-receiving pocket 22 formed in the tool holder upper surface 14 at a tool holder corner 16 of its forward end 18. The insert receiving pocket 22 may have a pocket bottom surface 24 and a pocket rear support wall 26.

In the illustrated embodiment, a cutting insert 30 is seated in the insert-receiving pocket 22. The cutting insert 30 may have an insert top surface 32 and a generally diamond shape. However, it will be appreciated that the cutting insert 30 may have any suitable shape, such as a triangle, rectangle, pentagon, circle and the like. An optional seat member 40 can be disposed between the cutting insert 30 and the pocket bottom surface 24 of the insert-receiving pocket 22. The seat member 40 may be fixedly secured to the insert-receiving pocket 22 by means of a threaded fastener 42, such as a screw, or the like. In an alternative embodiment, the insert 30 can be disposed on the pocket bottom surface 24 of the insert-receiving pocket 22 without the use of the seat member 40 or the threaded fastener 42.

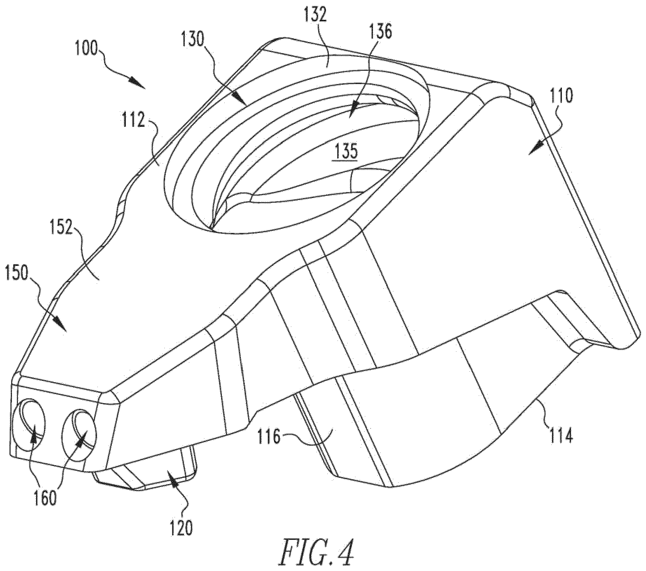

The cutting insert 30 may be clamped within the insert-receiving pocket 22 of the tool holder 10 by a through coolant clamp 100. As shown in Fig. 4, the through coolant clamp 100 includes a base portion 110 with a nose portion 150 extending outward from the base portion 110. The through coolant clamp 100 may be structured and arranged to allow a coolant fluid to flow through the base portion 110, out of the nose portion 150 and directed toward the cutting insert 30. The coolant clamp 100 may be made of suitable materials such as carbides and the like. For example, the carbide may be a cemented tungsten carbide such as cobalt cemented tungsten carbide.

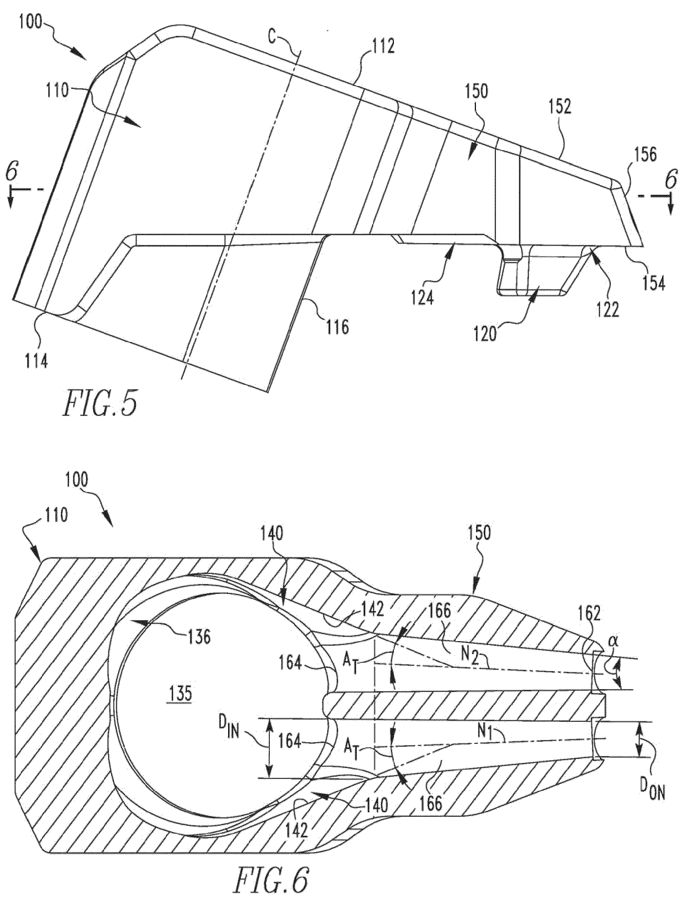

As shown in Fig. 5, the base portion 110 may have a clamp top surface 112 and a clamp bottom surface 114, that may be parallel with each other. The nose portion 150 may include a nose top surface 152 that may be parallel with the clamp top surface 112. The nose top surface 152 may be co-planar with and extend radially outward from the clamp top surface 112. A nose bottom surface 154 may extend radially outward from a clamp front surface 116. The nose bottom surface 154 may extend at an angle relative to the nose top surface 152 such that the distance between the nose top surface 152 and the nose bottom surface 154 decreases in the direction radially outward from the base portion 110.

As shown in Figs. 5, 7 and 8, the base portion 110 of the through coolant clamp 100 includes a clamp securing hole 130 extending from the clamp top surface 112 to the clamp bottom surface 114 along a central longitudinal axis C. The clamp securing hole longitudinal axis C may be substantially perpendicular to the clamp top and bottom surfaces 112 and 114. The clamp securing hole 130 may be circular in shape, and is structured and arranged to receive a clamp screw 50. As more fully described below, the clamp screw 50 may be structured and arranged to secure the through coolant clamp 100 to the tool holder body 12 and to deliver coolant fluid into the coolant clamp 100.

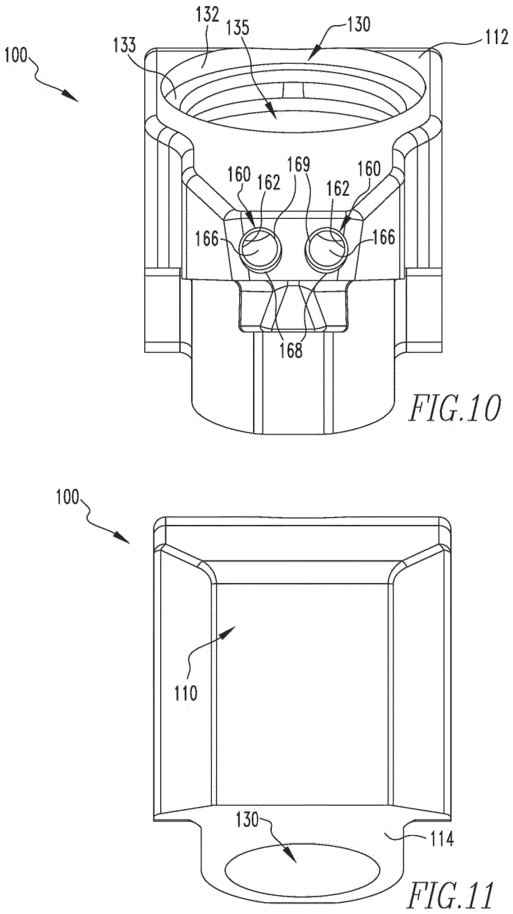

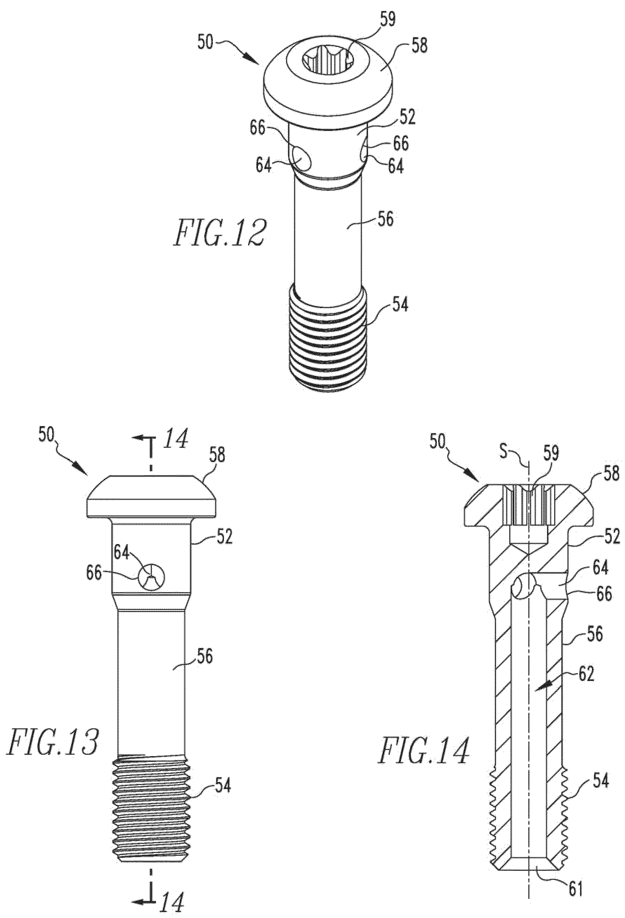

As shown in Figs. 4, 10 and 12, a clamp nub 120 may extend downward from the nose bottom surface 154. The clamp nub 120 may be structured and arranged to be inserted into an insert hole 35 of a cutting insert 30 when the through coolant clamp 100 secures a cutting insert 30 to the tool holder 10. The clamp nub 120 may be structured and arranged to prevent the cutting insert 30 from leaving the insert-receiving pocket 22 during operation. The clamp nub 120 may be generally triangular in shape, or may be any other suitable shape.

A clamp pad 124 may extend from the nose bottom surface and at least partially surround the outer perimeter of the nub base 122. The clamp pad 124 may be structured and arranged to contact the insert top surface 32 and apply a clamping force against the insert top surface 32 to thereby secure the cutting insert 30 in the insert-receiving pocket 22 of the tool holder 10.

As shown in Figs. 5 and 7-9, the nose portion 150 may include a nose end surface 156 extending from the nose top surface 152 to the nose bottom surface 154. The nose end surface 156 may be on the radially outward end of the nose portion 150. The nose end surface 156 may be angled or may be perpendicular to the nose top surface 152 and/or the nose bottom surface 154. The nose end surface 156 may be angled such that the portion the nose end surface 156 adjacent to the nose bottom surface 154 extends radially outward farther than the portion of the nose end surface 156 adjacent to the nose top surface 152. The nose end surface 156 may be a flat surface or may be a curved surface.

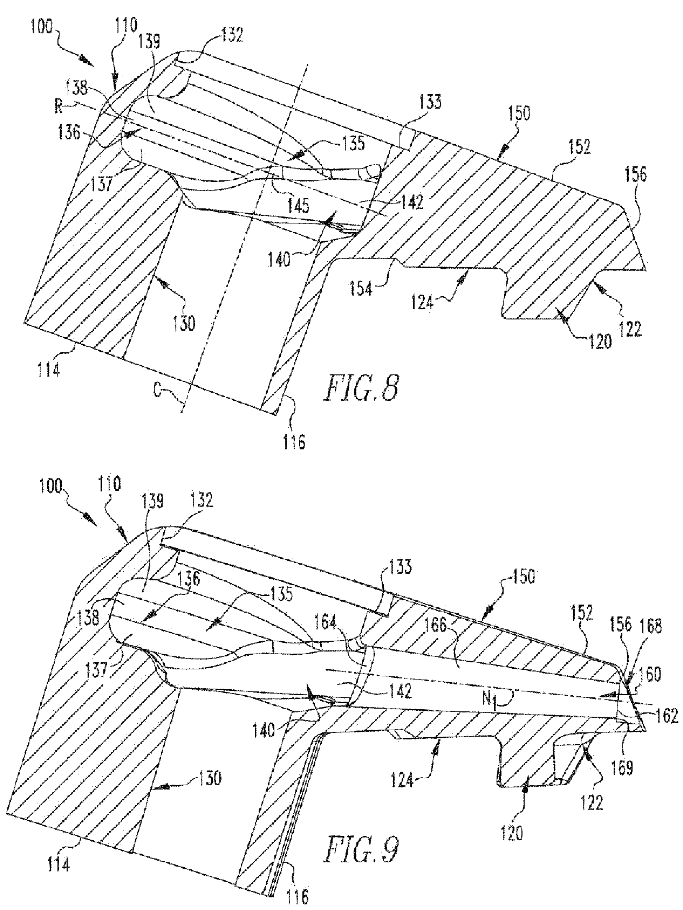

As shown in Figs. 6, 7 and 9, The nose portion 150 may include one or more coolant nozzles 160, such as two, three, or four coolant nozzles 160 extending from the base portion 110 through the nose end surface 156. Each coolant nozzle 160 may be structured and arranged to provide coolant spray onto the insert top surface 32. Each coolant nozzle may be straight or tapered, such as the slightly tapered conical shape shown in Figs. 6 and 9. The coolant nozzles 160 may extend from a nozzle inlet 164 adjacent the fluid chamber 135 (discussed further below) of the base portion 110 through the nose end surface 156 to a nozzle outlet 162. Each nozzle has a nozzle surface 166. As discussed above, the nozzle surface 166 may be tapered, e.g., may be conical in shape. Each coolant nozzle 160 may thus decrease in cross-sectional area between the nozzle inlet 164 and the nozzle outlet 162. A nozzle outlet diameter D_{ON} at the nozzle outlet 162 may be less than a nozzle inlet diameter D_{IN} of the nozzle inlet 164. As shown in Figs. 5 and 6, a nozzle taper angle α measured in a plane parallel with a plane of the nose bottom surface 154 may be provided.

As shown in Fig. 9, the nozzle outlet 162 may open into an indentation 168 of the nose end surface 156. The indentation 168 may extend from the nose end surface 156 toward the base portion 110. The indentation 168 may extend to an indentation back wall 169 that may be perpendicular to the nozzle outlet 162. The indentation 168 may be circular in shape.

As shown in Fig. 6, the coolant nozzles 160 may be separated from each other such that they are not in fluid communication with each other. The coolant nozzles 160 may include a first coolant nozzle and a second coolant nozzle. As shown in Figs. 6 and 9, the first coolant nozzle may extend along a first nozzle axis Ni while the second coolant nozzle may extend along a second nozzle axis N₂. The first nozzle axis Ni and the second nozzle axis N₂ may be slightly angled with respect to each other, as shown in Fig. 6, and may lie in the same plane as shown in Fig. 9.

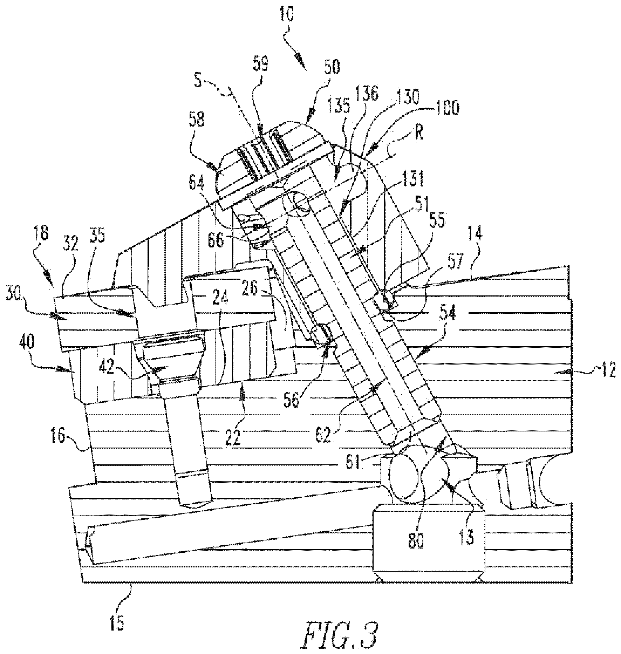

As shown in Figs. 1-3, a clamp screw 50 may be used to removably secure the through coolant clamp 100 to the tool holder body 12. As shown in Figs. 3, 13 and 14, the clamp screw 50 has a central longitudinal axis S. The clamp screw 50 may be generally cylindrical in shape and include a screw upper portion 52, a screw lower portion 54, and a screw intermediate portion 56. The screw intermediate portion 56 may have a smaller diameter than the screw upper portion 52 and the screw lower portion 54. The screw upper portion 52 may have the same diameter as the lower portion 54, or a different diameter. As shown in Fig. 3, a seal ring 55 may be provided around the screw intermediate portion 56 and contained in an annular seal seat 57 in the tool holder body 12 to thereby prevent coolant fluid from flowing from the screw upper portion 52 to the lower portion 54. The seal ring 55 may be made of any suitable material such as rubber or elastomeric polymer.

The screw upper portion 52 may include a screw head 58 with a screw recess 59 for accommodating a tool. For example, the screw recess 59 may be a cross, line, square shape, hexagonal shape and/or the like for accommodating a flat head screwdriver, Phillips head screwdriver, square screwdriver, Allen wrench, and/or the like. The screw upper portion 52 may have a generally smooth cylindrical surface, and screw lower portion 54 may have a threaded outer surface. The clamp screw 50 may be made of any suitable material such as hardened steel and the like, and may have a hardness less than a hardness of the through coolant clamp 100, which may be made of carbide or the like.

The screw lower portion 54 of the clamp screw 50 may include a screw coolant opening 61 in fluid communication with a body fluid channel 13 of the tool holder body 12 and a screw axial coolant passage 62 extending from the screw coolant opening 61 along the clamp screw central longitudinal axis S of the clamp screw 50 to the screw upper portion 52 of the clamp screw 50. The body fluid channel 13 may be encased within the tool holder body 12.

The coolant axial passage 62 may be formed in the clamp screw 50 such that the clamp screw axis S is substantially aligned with the clamp securing hole axis C of the base portion 110 when assembled on the tool holder 10. In addition, the coolant axial passage 62 may be in fluid communication with one or more screw coolant radial channels 64 that provide coolant through a respective screw coolant port 66 formed in the screw upper portion 52 of the clamp screw 50. Each screw coolant radial channel 64 may extend radially outward from the coolant passage 62 substantially perpendicular to the clamp screw central longitudinal axis S. However, it will be appreciated that each coolant radial channel 64 can be formed in such a way to be non-perpendicular to the clamp screw axis S.

Each screw coolant radial channel 64 and respective port 66 is in fluid communication with the fluid chamber 135 of the base portion 110 when secured to the tool holder body 12. In the embodiment shown, the clamp screw 50 has three coolant radial channels 64. However, there may be one, two, four, five, six, or more screw coolant radial channels 64. Each screw coolant radial channel 64 may extend in a different radial direction than the other screw coolant radial channels 64, and the coolant radial channels may be equally spaced around the circumference of the screw upper portion 52. Thus in the three-channel embodiment shown in the figures, the coolant radial channels 64 are equally spaced at 120° intervals around the circumference of the upper portion 52.

As shown in Fig. 3, when the through coolant clamp 100 is secured to the tool holder body 12, the clamp screw hole 130 may align with a body screw hole 80 extending from the tool holder upper surface 14 toward a tool holder lower surface 15 opposite the tool holder upper surface 14. The body screw hole 80 provides fluid communication between the clamp screw hole 130 and a coolant passage 82 of the tool holder body 12. The coolant passage 82 may be structured and arranged to contain fluid, such as coolant water or coolant solution. During operation of the tool holder 10 by a user, the fluid in the coolant passage 82 may flow from the coolant passage 82 through the body screw hole 80, and into the clamp screw hole 130. The coolant passage 82 may be contained within the tool holder body 12.

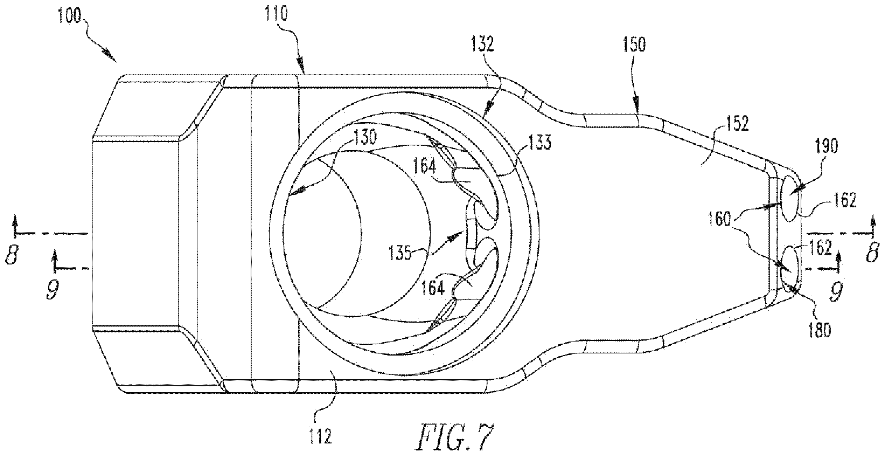

As shown in Fig. 7, the clamp screw hole 130 may include a screw support lip 132 structured and arranged to contact the screw head 58 of the clamp screw 50. The screw support lip 132 may include a support bottom surface 133 that may be recessed into the tool holder upper surface 14. The support bottom surface may be structured and arranged to engage with the screw head 58 of a clamp screw 50.

As shown in Figs. 8 and 9, the clamp screw hole 130 may include a fluid chamber 135 between the tool holder upper surface 14 and the tool holder lower surface 15. The fluid chamber 135 may be structured and arranged to receive a flow of coolant fluid from the clamp screw 50 and direct the fluid to one or more coolant nozzles 160 extending through the nose portion 150. The fluid chamber 135 may radially surround the clamp screw hole 130. The cross-sectional area of the fluid chamber 135 taken perpendicular to the clamp screw hole axis C and aligned with the screw coolant ports 66 may be larger than the cross-sectional area of the clamp screw hole 130.

The fluid chamber 135 may include a rear coolant channel 136 extending radially outward from the clamp screw hole 130. The rear coolant channel 136 may include a cylindrical channel portion 138. The cylindrical channel surface 138 may extend parallel to the central axis C. The cylindrical channel surface 138 may be located between a channel upper portion 139 and a channel lower portion 137. The channel upper portion 139 may be located between the cylindrical channel surface 138 and the clamp top surface 112. The channel lower portion 137 may be located between the cylindrical channel surface 138 and the clamp bottom surface 114.

The channel upper portion 139 may extend from the cylindrical channel surface 138 toward the clamp top surface 112. The channel upper portion 139 may bend such that a portion of the channel upper portion 139 runs parallel to the clamp top surface 112 toward the clamp screw hole 130.

The channel lower portion 137 may extend from the cylindrical channel surface 138 toward the clamp bottom surface 114. The channel upper portion 139 may bend such that a portion of the channel upper portion 139 runs parallel with the clamp bottom surface 114 toward the clamp screw hole 130.

The surfaces of the rear coolant channel 136 may merge directly into the nozzle inlets 164. The fluid chamber 135 may include one or more transition channel 140 extending in substantially the same direction as each of the nozzle centerlines Ni and N₂. Each transition channel 140 may be structured and arranged to direct fluid flow from the rear coolant channel 136 to the nozzle inlet 164 of each coolant nozzle 160. The rear coolant channel 136 may gradually merge into the transition channels 140. The merging surface 145 may be concave or straight in shape. The merging surface 145 may be structured and arranged such that fluid which passes over the merging surface 145 during operation of the tool holder 10 flows in a controlled manner through the nozzle outlet 162, e.g., the flow may have reduced turbulence and may be at least partially laminar. There may be no sharp edges along the merging surface 145 or between the rear coolant channel 136 and the transition channel 140.

Each transition channel 140 may include a transition outer surface 142 radially outward from the clamp screw hole 130 that connects to a respective nozzle inlet 164. As shown in Fig. 6, each transition outer surface 142 may form a transition angle A_{T} with a respective nozzle axis N₁ and N₂ at each nozzle inlet 164. Each transition angle A_{T} may be greater than 0°, for example, greater than 5°, or greater than 10°, or greater than 15°, or greater than 30°. The transition angle A_{T} may be less than 70°, for example, less than 65°, or less than 60°, or less than 50°. The transition angle A_{T} may range from 5° to 65°, for example, from 10° to 60°, or from 15° to 50°, or from 20° to 45°. While an angled inflection point is shown between each transition outer surface 142 and nozzle surface 166 in Fig. 6, a curved surface, such as a convex surface, concave surface, or a compound concave/convex surface, may be provided in the region of the transition angle A_{T}.

As shown in Fig. 6, the first and second nozzles axes N₁ and N₂ may taper inwardly with respect to each other from the nozzle inlets 164 to the nozzle outlets 162, for example, at a taper angle greater than 0° but less than the transition angle A_{T}, for example, from 0.1 to 30°, or from 0.2 to 20°, or from 0.4 to 5° or from 0.5 to 10°.

The fluid chamber 135 may be structured and arranged to interact with each coolant nozzle 160 such that fluid flow out of the nozzle outlet 162 is in a reduced turbulence or substantially laminar flow at typical volumetric flow rates of coolant fluid during operation of the tool holder 10. The volumetric flow rate of the coolant fluid during operating may be at least 0.1 L/min, for example, at least 0.5 L/min or at least 1 L/min, or at least 5 L/min. The volumetric flow rate of the coolant fluid during operation may typically be up to 200 L/min, for example, up to 100 L/min, or up to 50 L/min, or up to 25 L/min. The volumetric flow rate of the coolant fluid during operation may typically range from 0.1 to 200 L/min, for example, from 0.5 to 100 L/min, or from 1 to 50 L/min, or from 5 to 25 L/min. It is to be understood that the flow rates may vary based upon inlet coolant pressures and varying designs.

The controlled flow of coolant fluid out of each nozzle outlet 162 may be caused at least in part by the flow path in the coolant reservoir chamber 135 through each reservoir transition channel 140 along each transition outer surface 142 between the rear coolant channel 136 and each coolant nozzle 160. Each reservoir transition channel 140 may cause a gradual transition of the fluid during the flow through the through coolant clamp 100 such that the fluid does not interact with any sharp edges between the nozzle outlet 160 and the clamp screw 50. The gradual transition may be structured and arranged to reduce turbulent flow of the fluid and allow for more direct targeting of the coolant fluid flow. The controlled flow may allow the coolant fluid to form a beam upon exiting the nozzle outlet 162. This may allow for increased cooling of the cutting insert as well as more efficient use of the fluid.

When the tool holder 10 is in operation, the coolant fluid may flow from the tool holder body 12 through the clamp screw 50, then through the through coolant clamp 100, and out toward the cutting insert 30. The fluid may flow from a conventional fluid source (not shown) into tool holder body 12 through the body fluid channel 13. The fluid may then flow from the body fluid channel 13 into the screw coolant passage 62 of the clamp screw 50 through the screw coolant opening 61. The fluid may flow through the screw coolant passage 62 into one or more screw coolant channels 64 of the clamping screw 50. The fluid may then flow through the screw coolant channels 164 to the screw coolant port 66 into the coolant reservoir chamber 135. A portion of the fluid may contact an outer surface of the coolant reservoir chamber 135, such as the channel lower surface 137, channel cylindrical surface 138 or channel upper surface 139. The coolant reservoir chamber 135 may direct the fluid flow to one or more coolant nozzles 160. The fluid flow may flow from a rear coolant channel 136 of the coolant reservoir chamber 135 to a transition channel 140 and along the transition channel outer surface. The fluid flow may then flow from the transition channel 140 into the one or more coolant nozzles 160. The fluid flow may then pass through the coolant nozzle 160 and out of the nozzle outlet 162. The fluid flow may exit the nozzle outlet 162 in a controlled manner with reduced turbulence. The fluid flow may be directed toward the cutting insert 30.

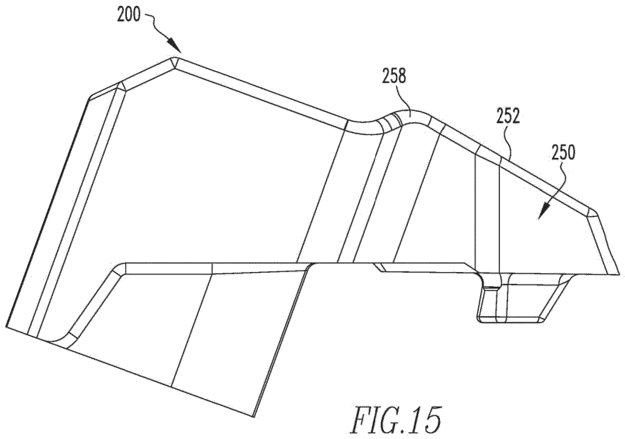

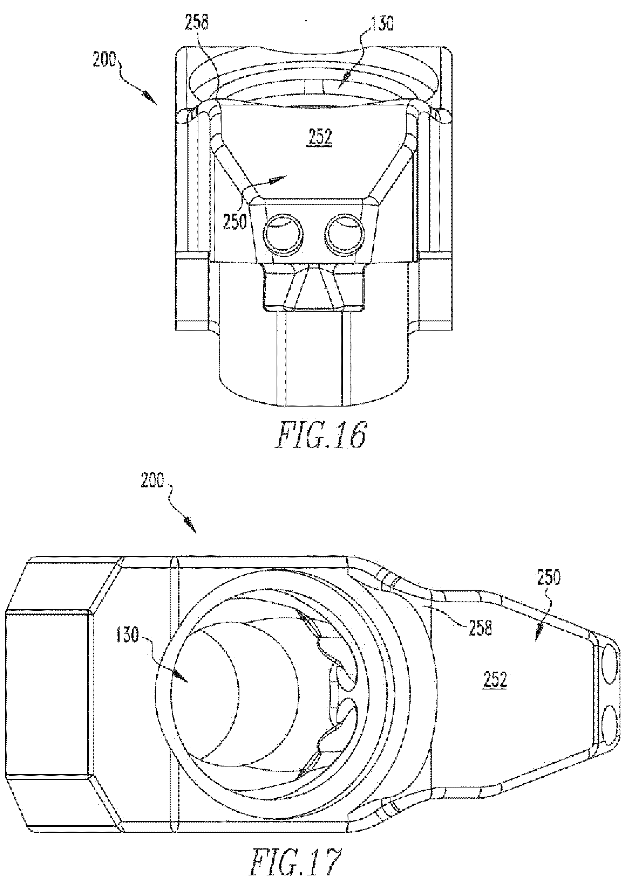

Figs. 15-17 illustrate a through coolant clamp 200 in accordance with another embodiment of the present invention. The through coolant clamp 200 includes a nose portion 250 with a nose top surface 252 that forms a protective raised lip 258 that may help protect the clamp screw head from abrasive chip wash during operation.

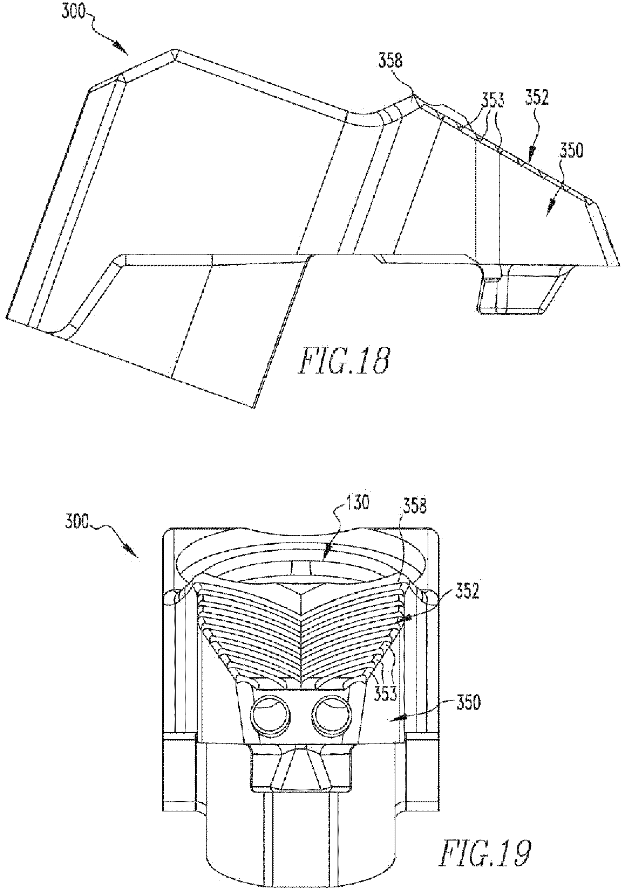

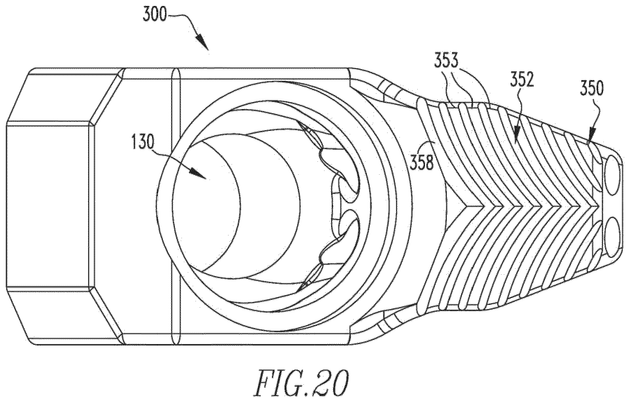

Figs. 18-20 illustrate a through coolant clamp 300 in accordance with another embodiment of the present invention. The through coolant clamp 300 includes a nose portion 350 with a nose top surface 352 that forms a protective raised lip 358 that may help protect the clamp screw head from abrasive chip wash during operation. The nose top surface 352 includes a pattern of multiple ridges 353, that make help direct chips off to either side away from the clamp screw and/or hold coolants in the recesses or troughs between the ridges 353 as chips slide off the nose portion 350.

As used herein, "including," "containing" and like terms are understood in the context of this application to be synonymous with "comprising" and are therefore open-ended and do not exclude the presence of additional undescribed or unrecited elements, materials, phases or method steps. As used herein, "consisting of" is understood in the context of this application to exclude the presence of any unspecified element, material, phase or method step. As used herein, "consisting essentially of" is understood in the context of this application to include the specified elements, materials, phases, or method steps, where applicable, and to also include any unspecified elements, materials, phases, or method steps that do not materially affect the basic or novel characteristics of the invention.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

In this application, the use of the singular includes the plural and plural encompasses singular, unless specifically stated otherwise. In addition, in this application, the use of "or" means "and/or" unless specifically stated otherwise, even though "and/or" may be explicitly used in certain instances. In this application and the appended claims, the articles "a," "an," and "the" include plural referents unless expressly and unequivocally limited to one referent.

Whereas particular embodiments of this invention have been described above for purposes of illustration, it will be evident to those skilled in the art that numerous variations of the details of the present invention may be made without departing from the invention as defined in the appended claims.

## Claims

1. A tool holder assembly comprising:
a tool holder body;
a cutting insert mounted on the tool holder body;
a through coolant clamp mounted on the tool holder body structured and arranged to secure the cutting insert on the tool holder body and to provide coolant fluid to the cutting insert and comprising a clamp screw hole having a longitudinal axis; and
a clamp screw extending through the clamp screw hole fastening the coolant clamp to the tool holder body and comprising an internal axial coolant fluid passage, wherein the through coolant clamp comprises:
a base portion;
a coolant fluid reservoir chamber within the base portion extending radially rearward from the clamp screw hole surrounding at least a portion of the clamp screw and in fluid communication with the internal axial coolant fluid passage of the clamp screw;
a nose portion extending radially forward from the base portion; and
at least one nozzle within the nose portion extending along a nozzle axis, wherein the at least one nozzle comprises:
a nozzle inlet in fluid communication with the coolant fluid reservoir chamber;
a nozzle outlet opposite the nozzle inlet; and
a nozzle coolant channel extending between the nozzle inlet and the nozzle outlet along a nozzle coolant channel axis; and
a transition outer surface in fluid communication between the coolant fluid reservoir chamber and the nozzle inlet of the at least one nozzle forming a smooth transition between the coolant fluid reservoir chamber and the nozzle inlet such that a transition angle measured in a plane perpendicular to the longitudinal axis of the through coolant clamp between at least a portion of the transition surface and the nozzle coolant channel axis is less than 60°.

2. The tool holder assembly of claim 1, wherein the transition angle is from 15° to 50°.

3. The tool holder assembly of claim 1 or claim 2, wherein the transition outer surface comprises a straight portion.

4. The tool holder assembly of any one of the preceding claims, wherein the coolant fluid reservoir chamber surrounds an upper portion of the clamp screw.

5. The tool holder assembly of any one of the preceding claims, wherein the nozzle coolant channel comprises a smooth conical shape, and a cross-sectional area of the nozzle inlet taken perpendicular to the nozzle coolant channel axis is greater than a cross-sectional area of the nozzle outlet taken perpendicular to the nozzle coolant channel axis.

6. The tool holder assembly of any one of the preceding claims, wherein the at least one nozzle comprises a first coolant nozzle and a second separate coolant nozzle.

7. The tool holder assembly of any one of the preceding claims, wherein the coolant clamp is structured and arranged to reduce turbulent flow of the coolant fluid at a volumetric flow rate of at least 1 L/min.

8. The tool holder assembly of any one of the preceding claims, wherein the clamp screw comprises:
a threaded lower portion;
a head at an end of the clamp screw opposite the threaded lower portion;
an upper portion between the threaded lower portion and the head;
an internal coolant axial passage having an inlet opening adjacent the threaded lower portion and extending to the upper portion; and
at least one coolant radial channel in fluid communication with the coolant axial passage having a radial outlet opening through an outer surface of the upper portion.

9. The tool holder assembly of claim 8, comprising at least two of the coolant radial channels structured and arranged to discharge the coolant fluid into the coolant fluid reservoir chamber.

10. The tool holder assembly of any one of the preceding claims, wherein the through coolant clamp comprises a carbide.

11. A through coolant clamp for providing coolant fluid to a cutting insert comprising:
a base portion;
a coolant fluid reservoir chamber within the base portion extending radially rearward from a clamp screw hole extending from a clamp top surface of the through coolant clamp to a clamp bottom surface of the through coolant clamp;
a nose portion extending radially forward from the base portion; and
at least one nozzle within the nose portion extending along a nozzle axis, wherein each nozzle of the at least one nozzle comprises:
a nozzle inlet in fluid communication with the coolant fluid reservoir chamber;
a nozzle outlet opposite the nozzle inlet; and
a nozzle coolant channel extending between the nozzle inlet and the nozzle outlet along a nozzle coolant channel axis; and
a transition outer surface in fluid communication between the coolant fluid reservoir chamber and the nozzle inlet of the at least one nozzle forming a smooth transition between the coolant fluid reservoir chamber and the nozzle inlet such that a transition angle measured in a plane perpendicular to the longitudinal axis of the through coolant clamp between at least a portion of the transition surface and the nozzle coolant channel axis is less than 60°.

12. The through coolant clamp of claim 11, wherein the transition angle is from 15° to 50°.

13. The through coolant clamp of any one of claims 11 and 12, wherein the transition outer surface comprises a straight portion.

14. The through coolant clamp of any one of claims 11 to 13, wherein the coolant fluid reservoir partially surrounds an upper portion of the clamp screw hole.

15. The through coolant clamp of any one of claims 11 to 14, wherein the nozzle coolant channel comprises a smooth conical shape, and a cross-sectional area of the nozzle inlet taken perpendicular to the nozzle coolant channel axis is greater than a cross-sectional area of the nozzle outlet taken perpendicular to the nozzle coolant channel axis.

16. The through coolant clamp of any one of claims 11 to 15, wherein the at least one nozzle comprises a first coolant nozzle and a second separate coolant nozzle.

17. The through coolant clamp of any one of claims 11 to 16, wherein the through coolant clamp is structured and arranged to reduce turbulent flow of the coolant fluid at a volumetric flow rate of at least 1 L/min.

18. The through coolant clamp of any one of claims 11 to 17, wherein the through coolant clamp comprises a carbide.

19. The through coolant clamp of any one of claims 11 to 18, further comprising a clamp screw engaged with the clamp screw hole, wherein the clamp screw comprises:
a threaded lower portion;
a head at an end of the clamp screw opposite the threaded lower portion;
an upper portion between the threaded lower portion and the head;
an internal coolant axial passage having an inlet opening adjacent the threaded lower portion and extending to the upper portion; and
at least one coolant radial channel in fluid communication with the coolant axial passage having a radial outlet opening through an outer surface of the upper portion.

20. The through coolant clamp of claim 19, comprising at least two of the coolant radial channels structured and arranged to discharge the coolant fluid into the coolant fluid reservoir chamber.

21. A clamp screw for a through coolant tool holder clamp assembly, the clamp screw comprising:
a threaded lower portion;
a head at an end of the clamp screw opposite the threaded lower portion;
an upper portion between the threaded lower portion and the head;
an internal coolant axial passage having an inlet opening adjacent the threaded lower portion and extending to the upper portion; and
at least one coolant radial channel in fluid communication with the coolant axial passage and having a radial outlet opening through an outer surface of the upper portion.

22. The clamp screw of claim 21, comprising at least two of the coolant radial channels structured and arranged to discharge the coolant radially outward from the upper portion.

23. The clamp screw of claim 22, comprising three of the coolant radial channels equally spaced around a circumference of the upper portion.
